# EUROPEAN PATENT APPLICATION

(11) **EP 2 133 925 A1**
(43) Date of publication of application: **16.12.2009**
(21) Application number: 08425412.7
(22) Date of filing: 11.06.2008
(51) Int. Cl.: H01L 31/042, H01L 31/048, F24J 2/52

(54) **Solar power generating system**

(71) Applicant: Ecoware S.p.A., Padova (IT)
(72) Inventor: Franceschini, Leopoldo, 35133 Padova (IT)
(74) Representative: Perani, Aurelio

(57) **Abstract**

A solar power generating system (10) comprising at least one photovoltaic module (30) for converting solar radiation into electrical energy, and a support frame (1) for supporting said at least one photovoltaic module (30) The solar system of the invention is **characterized in that** it comprises insulating means (50) interposed between said at least one photovoltaic module (30) and said support frame (1) for electrical insulation of said photovoltaic modules (30) from said support frame (1).

## Description

The present invention relates to solar power generating system according to the preamble of claim 1

As used in the present description and annexed claims, the term "photovoltaic module" is intended to indicate a device for converting solar radiation into electrical energy, which comprises one or more photovoltaic cells connected together and held within a metal support rim

Solar power generating systems are known in the art and typically comprise a support frame and at least one photovoltaic module supported by such frame.

The photovoltaic module is also designed to be connected to the power distribution network and/or to one or more power consuming units proximate to the system.

These solar systems are usually installed outdoors and exposed to any weather condition,

If the solar system is struck by a lightning, the discharge and the current induced thereby circulates within the support frame, passing through the metal rim of the photovoltaic modules.

This occurs because there are points of contact between the support frame and the metal rim of the photovoltaic module

Therefore, whenever a lightning strikes the photovoltaic system, high currents of short duration are induced all over the metal structures and cause often irreparable damages to the photovoltaic modules and, as a result, to the whole solar system.

In prior art solar systems, this problem is obviated by a grounding arrangement

While this solution allows discharging to ground of any surge caused by a lightning stroke on the solar system, it still has the drawback of' requiring higher labor costs for installation works

A further drawback of' prior art solar systems is that it requires complex assembly operations at the installation site

Typical assembly procedures involve a first step of installation of the support frame at the installation site, a second step of association of photovoltaic modules with the frame, and a final wiring step to carry the power generated by the system to the distribution network and/or directly to the power consuming units.

When the photovoltaic system is assembled directly on site, errors may be committed by installers in mounting and/or wiring electric connections; should these errors occur, they would apparently involve longer installation times and increased costs due to productivity losses.

Due to the above, the need arises for a solar power generating system of simple installation, ensuring the lack of surges circulating towards the photovoltaic module and having lower assembly costs

The object of the present invention is to provide a solar power generating system that has such structural and functional features as to fulfill the above need, while obviating the drawbacks of prior art

This object is fulfilled by a solar power generating system as defined in claim 1

Further features and advantages of the solar power generating system of the present invention, will be apparent from the following description of one preferred embodiment thereof; which is given by way of illustration and without limitation with reference to the accompanying figures, in which:
- Figure 1 is a front view of one embodiment of the solar power generating system of the present invention;
- Figure 2 is a front view of a further embodiment of the solar system of the present invention;
- Figure 3 is a perspective view of a detail of the solar system of Figure 2, showing the connection of the first profiles with the second profiles;
- Figure 4 is a perspective view of a peripheral part of the solar system of Figure 1 or Figure 2;
- Figure 5 is a perspective view of the solar system of Figure 1 and particularly the connection between the first and second profiles and the locking arrangement of the photovoltaic modules between the lock member and the second profiles;
- Figure 6 is a perspective view of the solar system of Figure 2;
- Figure 7 is a sectional view of the solar system of Figure 1;
- Figure 8 is a perspective view of the solar system of Figure 2;
- Figure 9 is a perspective view of the assembly of a photovoltaic module in the frame of the solar system of Figure 2.

Referring to the annexed figures, numeral 100 generally designates a solar power generating system of the present invention.

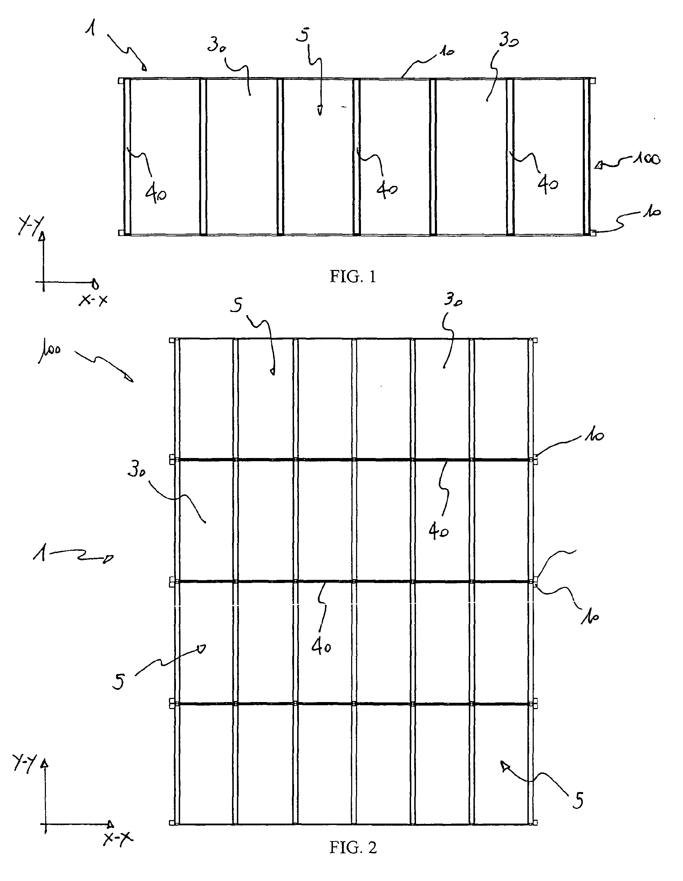

As shown in Figures 1 and 2, the solar system comprises at least one photovoltaic module 30 for converting solar radiation into electrical energy, and a support frame 1 for supporting the photovoltaic module 30

Furthermore, the solar system 100 comprises first profiles 10 extending with parallel orientations in a first direction of extension X-X.

Preferably, the first profiles 10 lie on the same plane X-Y.

The solar system 100 further comprises second profiles 20 which extend in a second direction of extension Y-Y substantially perpendicular to the first direction of' extension X-X.

The second profiles 20 are also linked to the first profiles 10 in predetermined positions

For instance, the first profiles 10 and the second profiles 20 are linked together by welding, riveting and/or the like

By joining the first profiles 10 with the second profiles 20 a plurality of housings 5 are defined, each capable of receiving a photovoltaic module 30

In the embodiment of Figure 1, a support frame 1 is provided, which comprises two first profiles 10 and seven second profiles 20, providing six housings 5 for as many photovoltaic modules 30

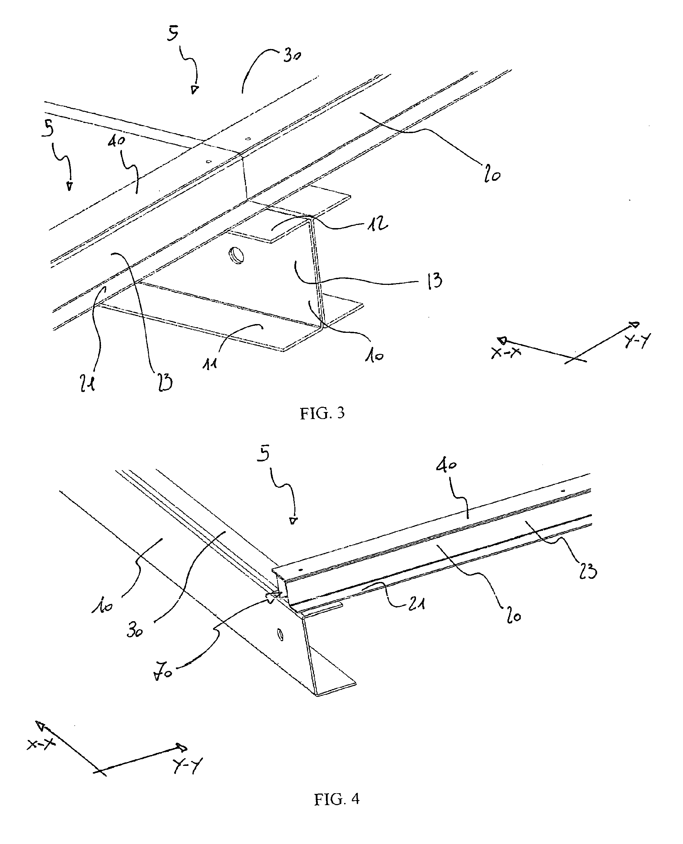

As shown in Figures 3 to 7, the second profiles 20 have a substantially "S2"-shaped cross section

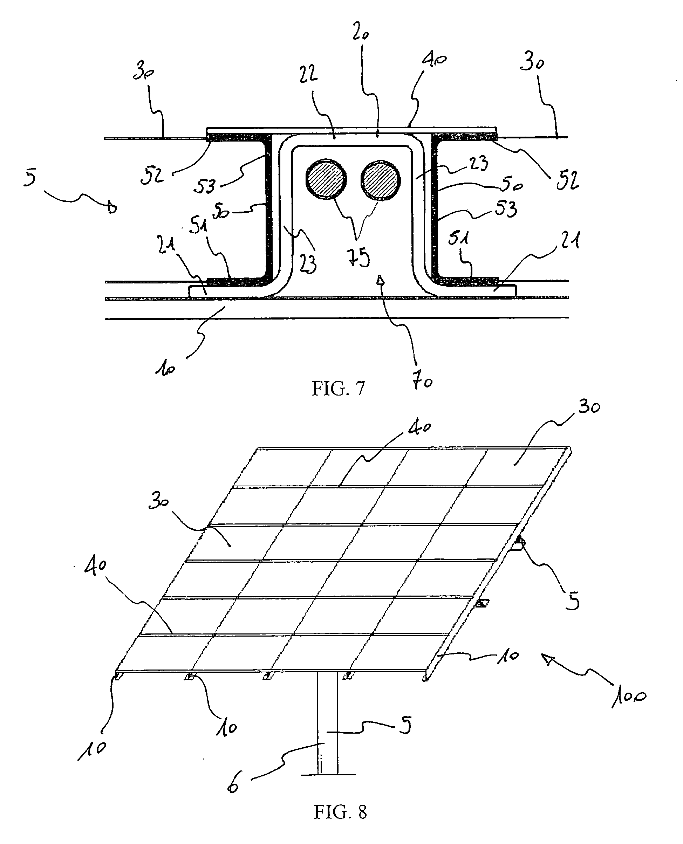

Particularly, referring to figure 7, the second profiles 20 define a housing 70 for receiving electric connection means

Thus, as shown in Figure 7, electric connection means 75 are placed in this housing 70 for connecting the photovoltaic modules 30 together and for connecting the photovoltaic modules 30 to the power distribution network

Particularly, the connection means 75 include first electric connection means for electrically connecting said photovoltaic modules 30 together and second electric connection means for connecting said photovoltaic modules 30 to the power distribution network

In this particular embodiment, the first and second electric connection means are electric cables of appropriate section, selected according to the power of the photovoltaic system 100.

Particularly, according to an advantageous aspect of the present invention, the second profiles 20 comprise:
- two first lower portions 21 in mutually opposed positions, oriented parallel to the second direction of extension Y-Y,
- a second portion 22 located above the two first portions 21 and parallel thereto, and
- two third portions 23 for connecting the two first portions 21 to the second portion 22.

In one embodiment, the first profiles have a substantially channel-shaped cross section

Advantageously, as shown in Figures 3 to 6, the first profiles 10 comprise:
- a first extension 11 oriented parallel to the first direction of extension X-X,
- a second extension 12 substantially parallel and opposite to the first extension 11, and
- a third extension 13 connecting the first 11 and second 12 extensions

Particularly, the third extension 13 can be linked to the first portion 21 of the second profiles 20

Thus, the conformation of the first profiles 10 allows the solar system 100 to have a frame 1 of modular configuration, because the third extension 13 of the first profile 10 can be linked to another respective third extension 13 of an additional first profile 10.

Successive linking of second profiles 20 to first profiles 10 in predetermined positions adds new housings 5 for receiving additional photovoltaic modules 30, thereby forming a solar system of higher power generation capacity.

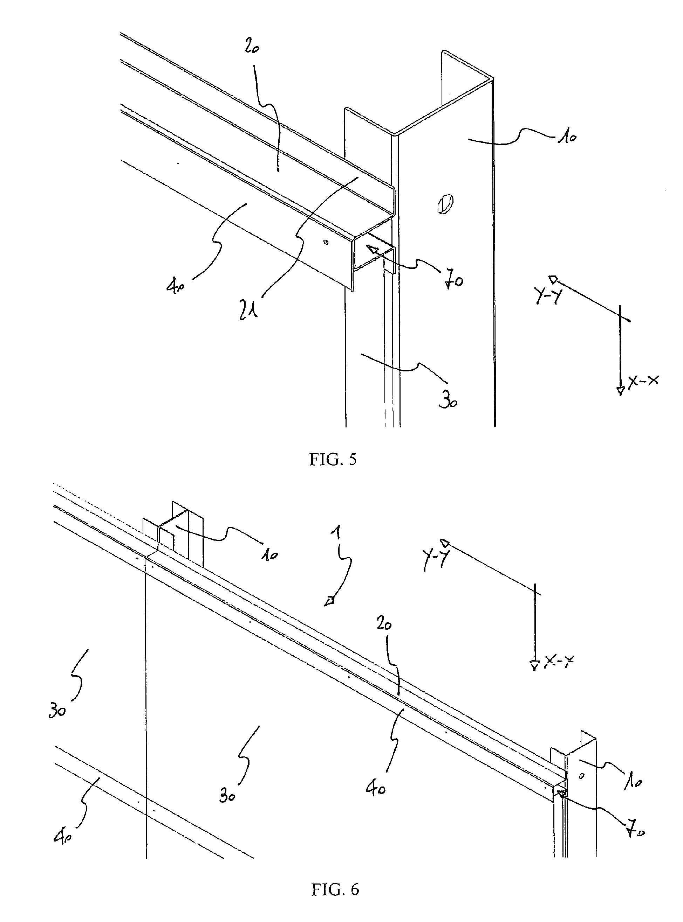

As shown in Figures 4 and 5, the two first portions 21 are linked to the first profiles 10 by typical connections (not shown), such as screw-bolt or rivet connections or welding connections.

It shall be noted that the receptacle 70 is adapted to contain the connection means 75 and is defined by the portions 21 and 22 of the second profiles 20 and by the second extension 12 of the first profile 10

In the embodiment of Figure 2, a solar system 100 is provided, which comprises eight first profiles 10 and twenty-eight second profiles 20, providing twenty-fom housings 5 for as many photovoltaic modules 30

In a preferred embodiment, the solar system 100 has lock means 40 linked to the second portion 22 for clamping the modules 30 in the plurality of housings 5 in a pack-like arrangement.

Thus, the frame 1 can receive a plurality of photovoltaic modules 30, which are firmly secured by the lock means 40

The lock means 40 may be provided, for instance, in the form of a metal plate, an end cap or other members adapted to lock the photovoltaic module 30

Advantageously, the solar system 100 comprises insulating means 50.

The insulating means 50 are interposed between the photovoltaic module 30 and the frame 1 for electrically insulating the photovoltaic modules 30 from the support frame 1

Particularly, the insulating means 50 include a polymer material, such as an EPDM (ethylene propylene diene monomer) elastomer.

These insulating means have a predetermined thickness that falls in a range from one to two centimeters, preferably one centimeter and a half.

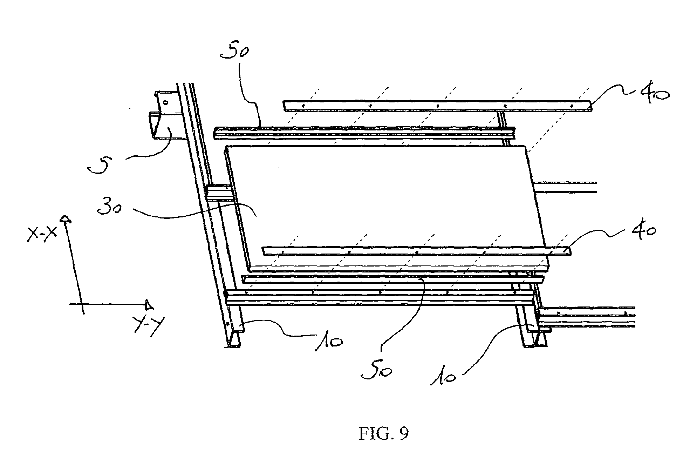

As shown in Figures 7 and 9, the insulating means 50 extend in the second direction of extension Y-Y

Also, the insulating means 50 have a substantially channel-shaped cross section

Still referring to Figure 7, the insulating means 50 comprise:
- a first part 51 adapted to be associated with the first portion 21 of the second profiles 20,
- a second part 52 substantially parallel and opposite to the second part 51 and adapted to be associated with the second portion 23 of the second profiles 20, and
- a third part 53 for connection of the first 51 and the second 52 parts and adapted to be associated with the third portion 23 of the second profiles 20.

Thus, advantageously, the photovoltaic modules 30 will never contact the frame 1, and hence the first 10 and/or second 20 profiles Therefore, the modules 30 will be electrically insulated from any discharges and/or surfaces that might circulate in the frame 1.

This will allow the solar system to provide adequate protection to the photovoltaic modules 30 against any discharges and/or surges circulating in the frame, possibly due to lightning strokes.

As a result, should any discharge circulate within the frame, the provision of the insulating means 50 would ensure adequate electric insulation of the photovoltaic modules 30

Therefore, the solar system 100 will avoid any grounding requirement, while ensuring effective protection from the irreversible damages that discharges and/or surges circulating therein would cause to these modules 30

This will also ensure compliance with the appropriate electric safety class.

As is well-known to those skilled in the art, currently available photovoltaic modules 30 are rated class II (see CE standards) in terms of electric insulation and the solar system 100 of the present invention, having the insulating means 50 between the frame 1 and the module 30, ensures compliance with such electric safety class.

It shall be also noted that the solar system 100 is assembled at the factory and not at the installation site In other words, the system is pre-assembled at the factory and later installed at the selected site

The possibility of pre-assembling the photovoltaic system 100 at the factory, i.e. of mounting the photovoltaic modules 30 into the frame 1 with the insulating means 50 interposed therebetween ensures compliance with Class II insulation requirements, unlike prior art on-site assembled solar system, due to the minimization or elimination of the risk of wiring errors, or wires shorted to ground, and to the advantage of not requiring works for a grounding connection

Thus, prior art on-site assembled solar systems must be downrated to Class I, which implies the installation complications associated with grounding requirements

Furthermore, the polymer material selected for the insulating means 50 has such an absorption coefficient as to absorb the mechanical energy generated by an impact induced in the frame 1.

This is particular advantageous during transportation of the photovoltaic system 100 from the factory to the installation site.

During transportation, the system is likely to be subjected to impacts and/oi jolts that might cause fractures in the photovoltaic modules and affect their operation

Advantageously, the position and conformation of the insulating means 50 ensures adequate protection to the photovoltaic modules 30 even during transportation

Therefore, the solar system 100 may be loaded into means of transport, such as trucks or ships, in the safest and easiest manner, the polymer material of the insulating means 50 ensuring a sufficient absorption coefficient to provide protection to the photovoltaic modules, which are thereby entirely protected by the frame 1 against any accidental impact

Figure 8 shows the solar system 100 of the present invention which comprises support means 5 linked to the frame and adapted to be associated with an installation surface.

Furthermore, the solar system 100 is equipped with motor drive means 6 fox driving the support means 5 to orient the frame 1 perpendicular to solar radiation, thereby increasing power generation as compared with the one achieved by similar solar system without motor drive means

As clearly shown in the above description, the solar power generating system of the present invention fulfills the above mentioned needs and obviates prior art drawbacks as set out in the introduction of this disclosure

Those skilled in the art will obviously appreciate that a number of changes and variants may be made to such solar system as described hereinbefore, without departure from the scope of the invention, as defined in the following claims

## Claims

1. A solar power generating system (100) comprising:
- at least one photovoltaic module (30) for converting solar radiation into electrical energy,
- a support frame (1) for supporting said at least one photovoltaic module (30),
**characterized in that** it comprises insulating means (50) interposed between said at least one photovoltaic module (30) and said support frame (1) for electrical insulation of said photovoltaic modules (30) from said support frame (1).

2. A solar system (100) as claimed in claim 1, wherein said insulating means (50) comprise a polymer material, having a predetermined thickness falling in a range from one to two centimeters

3. A solar system (100) as claimed in claim 1 or 2, wherein said support frame (1) for photovoltaic modules (30) comprises:
- first profiles (10) extending with parallel orientations in a first direction of extension (X-X), said first profiles (10) lying on the same plane (X-Y),
- second profiles (20) extending in a second direction of extension (Y-Y) substantially perpendicular to said first direction of extension (X-X), said second profiles (20) being linked to said first profiles (10) in predetermined positions,
- said first profiles (10) and said second profiles (20) providing a plurality of' housings (5), each capable of receiving a photovoltaic module (30),
wherein said insulating means (50) are associated to at least one portion of one of said first profiles (10) and/or said second profiles (20) for electrically insulating said photovoltaic modules (30) from said support frame (1)

4. A solar system (100) as claimed in claim 3, wherein said second profiles (20) have a substantially "Ω"-shaped cross section, said second profiles (20) defining a housing adapted to receive electric connection means (75)

5. A solar system (100) as claimed in claim 3 or 4, wherein said second profiles (20) comprise:
- two first lower portions (21) in mutually opposed positions, oriented parallel to said second direction of extension (Y-Y),
- a second portion (22) located above said two first portions (21) and parallel thereto, and
- two third portions (23) for connecting said two first portions (21) to said second potion (22),
wherein said two first portions (21) are linked to said first profiles (10)

6. A solar system (100) as claimed in claim 1, wherein said frame (1) has lock means (40) linked to said second portion (22) for clamping said modules (30) in said plurality of housings (5) in a pack-like arrangement

7. A solar system (100) as claimed in any one of claims 1 to 6, wherein said insulating means (50) extend in said second direction of' extension (Y-Y), said insulating means (50) having a substantially channel-shaped cross section.

8. A solar system (100) as claimed in any one of the preceding claims 1 to 7, wherein said insulating means (50) comprise:
- a first part (51) adapted to be associated with said first portion (21) of said second profiles (20),
- a second part (52) substantially parallel and opposite to said second part (51) and adapted to be associated with said second portion (23) of said second profiles (20),
- a third part (53) for connection of said first (51) and said second (52) parts and adapted to be associated with said third portion (23) of said second profiles (20)

9. A solar system (100) as claimed in any one of the preceding claims 3 to 8, wherein said first profiles (10) have a substantially channel-shaped cross section

10. A solar system (100) as claimed in claim 9, wherein said first profiles (10) comprises:
- a first extension (11) oriented parallel to said first direction of extension (X-X),
- a second extension (12) substantially parallel and opposite to said first extension (11),
- a third extension (13) for connection of said first (11) and said second (12) extensions, said third extension (13) being adapted to be linked with said first portion (21) of said second profiles (20).

11. A solar system (100) as claimed in claim 4, wherein said the connection means (75) include first electric connection means for electrically connecting said photovoltaic modules (30) together and second electric connection means for connecting said photovoltaic modules (30) to the power distribution network

12. A solar system (100) as claimed in any one of the preceding claims, comprising:
- support means (5) linked to said frame (1) and adapted to be associated with an installation surface,
- motor drive means (6),
said motor drive means (6) being adapted to drive said support means (5) to orient said frame (1) perpendicular to solar radiation
